(19) Europäisches Patentamt
European Patent Office
Office européen des brevets

(11) **EP 2 627 116 A1**

(12) **EUROPEAN PATENT APPLICATION**

(43) Date of publication:
**14.08.2013 Bulletin 2013/33**

(51) Int Cl.:
**H04W 24/10** (2009.01)

(21) Application number: **12305154.2**

(22) Date of filing: **13.02.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Koppenborg, Johannes**<br>**74372 Sersheim (DE)**<br>• **Nguyen, M Le Hang**<br>**70839 Gerlingen (DE)** |
| (71) Applicant: **Alcatel Lucent**<br>**75007 Paris (FR)** | (74) Representative: **Wetzel, Emmanuelle et al**<br>**Alcatel-Lucent Deutschland AG**<br>**Intellectual Property & Corporate Standards**<br>**Lorenzstrasse 10**<br>**70435 Stuttgart (DE)** |
| (72) Inventors:<br>• **Aziz, Danish**<br>**70435 Stuttgart (DE)** | |

(54) **Method for selecting a feedback mode for a wireless transmission, first network node, and second network node thereof**

(57)    The invention relates to a method (MET1-2) for selecting a feedback mode for a wireless transmission from a first network node (BS1) to a second network node (MS1). The method contains the steps of determining a context of data (CD) transmitted by the wireless transmission or determining a utilization of radio resources (ALD) on a radio link from the second network node (MS1) to the first network node (BS1), and selecting the feedback mode (SEL) based on the context and/or on the utilization of radio resources. The invention further relates to a first network node (BS1) and to a second network node (MS1, GW).

FIG. 3

**Description**

**FIELD OF THE INVENTION**

The invention relates to radio communication and, more particularly but not exclusively, to selecting a feedback mode for a wireless transmission.

**BACKGROUND**

Radio communication systems provide users of mobile stations connectivity nearly everywhere and at every time. This connectivity is provided by radio frequency signals, which are transmitted from antenna systems of a radio communication system to a mobile station owned by the user and which are transmitted from the mobile station to the antenna systems of the radio communication system. Transmission parameters for a wireless transmission from a first transceiver to a second transceiver such as frequency band, bandwidth, modulation scheme, required signal-to-noise ratio etc. are usually adapted to a current characteristic of a transmission channel from the first transceiver to the second transceiver.

In case of a TDD transmission mode (TDD = time division duplex) the current characteristic of the transmission channel from the first transceiver to the second transceiver is identical (by neglecting short-term variations with a time period similar to or smaller than the duplex period) to a current characteristic of an inverse transmission channel from the second transceiver to the first transceiver based on a reciprocity of the transmission channel and the inverse transmission channel. Thereby, the current characteristic of the transmission channel from the first transceiver to the second transceiver can be determined at the first transceiver by measuring the current characteristic of the further transmission channel from the second transceiver to the first transceiver.

In case of an FDD transmission mode (FDD = frequency division duplex) the current characteristic of the transmission channel from the first transceiver to the second transceiver in a first frequency range can strongly differ from the further transmission channel from the second transceiver to the first transceiver in a second frequency range due to a so-called selective fading or frequency selective fading. Thus, it is not useful to determine the current characteristic of the transmission channel from the first transceiver to the second transceiver at the first transceiver by measuring the current characteristic of the further transmission channel from the second transceiver to the first transceiver. Instead of that the current characteristic of the transmission channel from the first transceiver to the second transceiver is measured at the second transceiver and feedback information of said current characteristic such as CQI (CQI = channel quality indicator), PMI (PMI = Precoding matrix indication), RI (RI = rank indication), SNR (SNR = signal-to-noise ratio), SINR (SINR = signal-to-noise-and-interference ratio) is transmitted from the second transceiver to the first transceiver.

**SUMMARY**

The way of reporting feedback information in a radio communication system has an impact on performance parameters of the wireless transmission from the first transceiver to the second transceiver such as a maximum possible data rate, or a transmission error rate, which in turns relates to spectral efficiency or capacity of the radio communication system.

Therefore, it is an object of the invention to improve the spectral efficiency as well as the capacity in a radio communication system.

The object is achieved by a method for selecting a feedback mode for a wireless transmission from a first network node to a second network node. The method contains the steps of determining a context of data transmitted by the wireless transmission or determining a utilization of radio resources on a radio link from the second network node to the first network node and selecting the feedback mode based on the determined context and/or on the determined utilization of radio resources.

The object is further achieved by a first network node and by a second network node. For example in case of a downlink transmission in a radio communication system such as 3GPP LTE (3GPP = Third Generation Partnership Project, LTE = Long Term Evolution), the first network node may be for example a base station such as an eNodeB (eNodeB = enhanced NodeB) and the second network node may be for example a mobile station such as a UE (UE = User Equipment). In further alternatives, the first network node may be the base station and the second network node may be a wireless relay node or the first network node may be the wireless relay node and the second network node may be the mobile station. In case of an uplink transmission in the radio communication system, the first network node may be for example the mobile station and the second network node may be for example the base station. In further alternatives, the first network node may be the mobile station and the second network node may be the wireless relay node or the first network node may be the wireless relay node and the second network node may be the base station.

In even further alternatives, the first network node may be a first mobile station and the second network node may be a second mobile station in case of a so-called wireless ad-hoc network or the first network node may be a first base station and the second network node may be a second base station in case of wireless communication between two base stations.

In other words, the invention is applicable to the fact that if most of a communication between two network nodes is carried out in a first direction, then unused radio resources of a backward direction between the two network nodes can be used for an improved feedback, which in turn can be used to improve the communication in the first direction.

The method offers a first benefit of increasing a spectral efficiency as well as a capacity in a radio communication system by applying an accurate and instantaneous reporting of feedback information regarding a current reception characteristic of the transmission channel. The method applies an adaptation of an amount of feedback information to a current load on a reverse transmission channel. In the state of the art, reporting of feedback information is only defined and selected according to the selected transmission mode for the wireless transmission from a base station to a mobile station.

The method offers a second benefit of improving customer satisfaction for subscribers of an operator of the radio communication system, because the user will recognize for example a higher download rate or upload rate, fewer interruptions in a played video or fewer lost connections in case of telephone calls.

According to a preferred embodiment, the method further contains the step of determining a magnitude of unused radio resources of the radio link from the second network node to the first network node based on the context and/or the utilization of radio resources and the selecting step is further based on the determining step for the magnitude of the unused radio resources. The preferred embodiment allows directly determining free radio resources on the reverse link from the second network node to the first network node. The determined free radio resources provide an improved foundation for determining, which kind of feedback mode with a corresponding required data rate is suitable for transmission via the reverse radio link.

According to a further preferred embodiment, the selecting step selects a heavy feedback mode with a first radio resource usage above a first predefined value, if a value of the unused radio resources is above the first predefined value and the selecting step selects a light feedback mode with a second radio resource usage below a second predefined value, if a value of the not-used radio resources is below the second predefined value. Thereby, the feedback mode may be automatically adapted to an amount of the unused radio resources. Heavy feedback mode means a feedback mode, which provides a much more accurate description of a current channel characteristic from the first network node to the second network node than the light feedback mode.

The heavy feedback mode may be for example a feedback of several or all elements of a channel matrix of the wireless transmission for every radio resource element such as an LTE PRB (PRB = Physical Resource Block; group of 12 adjacent frequency subcarriers with a spacing of 15 kHz: PRB bandwidth = 180 kHz) from the first network node to the second network node and thereby provides instantaneous channel information. The heavy feedback mode may transmit feedback information as much as possible and as frequent as possible by using all or almost all free radio resources and thereby requires a high number of radio resources, which can be radio resources, which are usually applied for user data and/or signaling data.

The light feedback mode may be for example a feedback of one or more of the following characteristic parameters of the wireless transmission from the first network node to the second network node: a channel quality indicator, a signal-to-noise-ratio, a signal-to-noise-and-interference-ratio, or at least one index from a group of at least two pre-coding vectors. The light feedback mode may transmit feedback information, which may have been averaged over a predefined time period by using few free radio resources and thereby requires a low number of radio resources, which are preferably radio resources usually applied for signaling data.

According to an even further preferred embodiment, the context may be a service-type, an application-layer-type or a transport-layer-type of the data. The data may be primarily user data of a service such as video streaming, gaming, web browsing etc. requested by a user of a mobile station. Alternatively, the data may be signaling data to be exchanged between the first network node and the second network node. Preferably, the context is determined by a so-called cross layer interaction or by a packet header analysis.

According to several alternatives, the determining step of the context may be executed:

1. by the first network node as a transmitter for the wireless transmission, or
2. by the second network node as a receiver of the wireless transmission. In such a case, the method further contains the step of transmitting information of the context from the second network node to the first network node, or
3. by a further network node as an intermediate node or an end node of a data transmission for the data. The further network node may be for example an application server or a gateway of a radio communication system. In such a case, the method further comprises the step of transmitting information of the context from the further network node to the first network node.

The first alternative provides the advantage, that no information of the context must be exchanged between network nodes.

The other two alternatives allow distributing a processing load for analyzing the context of the data. According to two further alternatives, the determining step of the utilization of radio resources may be executed by the first network node or by the second network node, and the determining step of the utilization of radio resources comprises determining a magnitude of allocated radio resources for the radio link from the second network node to the first network node.

In a similar way, the first alternative provides the advantage that no information of the utilization of radio resources must be exchanged between network nodes and the second alternative provides the advantage of distributing a processing load for determining the utilization of radio resources. Regarding a further preferred embodiment, the method further contains the step of determining at least one channel condition of the wireless transmission such as a signal quality and the selecting step is further based on a comparison of the at least one channel condition with one or several predefined channel conditions.

Regarding the further preferred embodiment, the method further contains the step of determining a distance from the first network node to the second network node and the selecting step is further based on a comparison of the determined distance with a predefined distance. Thereby, the selection of the feedback mode can be further improved, because a selection of the heavy feedback mode may not suitable even if there are enough unused radio resources on the backward link. If the distance between the first network node and the second network node is too large and equal to or above the first predefined distance, the first network node may already transmit the data with a maximum output power and/or the second network node may receive the data with a large transmission error rate. In such a case a better knowledge of the transmission channel characteristic from the first network node to the second network node may not improve the data rate of the capacity of the wireless transmission to the second network node.

According to an even further preferred embodiment, the first network node may be a base station of a radio communication system, the second network node may be a mobile station, the base station may provide wireless coverage for a coverage area, the method may further contain the step of determining an interference level of an application of the feedback mode on radio frequency signals received by a further mobile station or by a further base station in a neighbouring coverage area and the selecting step may be further based on a comparison of the interference level with a predefined interference level. Also this embodiment allows further improving the selection of the feedback mode, because a selection of the heavy feedback mode may not suitable even if there are enough unused radio resources on the backward link. If the distance between the mobile station and the border of the coverage area is too small and equal to or below the second predefined distance, an application of the heavy feedback mode by the second network node may provide too much inter-cell interference or inter-sector interference to a neighboring coverage area.

Further preferably, the method further contains the step of adapting a transmission mode for the wireless transmission based on the selected feedback mode. This embodiment not only improves the wireless transmission by changing transmission parameters of a current transmission mode but also allows switching to another transmission mode, which is more suitable to the selected feedback mode. Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows schematically a radio communication system, which contains exemplarily two base stations, two mobile stations and a gateway according to embodiments of the invention.
Figure 2 shows schematically a flow diagram of a generic method in accordance to the embodiments of the invention.
Figure 3 shows schematically a flow diagram of an embodiment of the generic method shown in Figure 2.
Figure 4 shows schematically a flow diagram of a further embodiment of the generic method shown in Figure 2.
Figure 5 shows schematically a flow diagram of an even further embodiment of the generic method shown in Figure 2.
Figure 6 shows schematically a block diagram of a first network node according to the embodiments of the invention.
Figure 7 shows schematically a block diagram of a second network node according to the embodiments of the invention.

## DESCRIPTION OF THE EMBODIMENTS

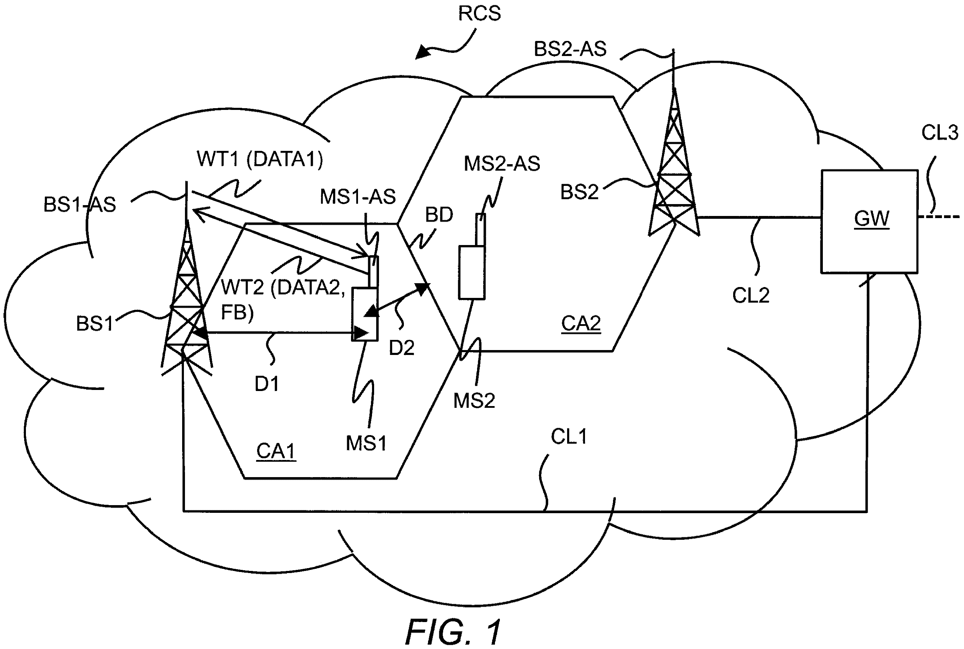

Figure 1 shows schematically a radio communication system RCS, which contains exemplarily a first base station BS1, a second base station BS2, a first mobile station MS1, a second mobile station MS2 and a gateway GW for the radio communication system RCS to further external networks such as the Internet or a further radio communication system. Further base stations, further mobile stations and further gateways of the radio communication system RCS are not shown for simplification.

The radio communication system RCS may be for example a WLAN (WLAN = wireless local area network) such as defined by IEEE 802.11 standards (IEEE = Institute of Electrical and Electronics Engineers), a WiMAX network (WiMAX = Worldwide Interoperability for Microwave Access) such as one of the IEEE 802.16 family of wireless-networks standards ratified by the WiMAX Forum or an LTE access network such as defined by 3GPP.

The term "base station" may be considered synonymous to and/or referred to as a base transceiver station, access point base station, access point, macrocell, microcell, femtocell, picocell etc. and may describe equipment that provides wireless connectivity via one or more radio links to one or more mobile stations.

The first base station BS1 and the second base station BS2 may be for example LTE eNodeBs, so-called femtocells, IEEE 802.11 access points, or WiMAX base stations.

The first base station BS1 contains a first base station antenna system BS1-AS or is connected per remote to the first base station antenna system BS1-AS. The first base station antenna system BS1-AS provides wireless coverage for a first coverage area CA1, which may be for example a so-called radio cell.

The term "radio cell" may be considered synonymous to, and may hereafter be occasionally referred to, as a cell, sector, or radio sector.

The second base station BS2 contains a second base station antenna system BS2-AS or is connected per remote to the second base station antenna system BS2-AS. The second base station antenna system BS2-AS provides wireless coverage for a second coverage area CA2, which is located adjacent to the first coverage area CA1.

The first base station antenna system BS1-AS and the second base station antenna system BS2-AS may contain one antenna element or preferably several antenna elements such as two or four antenna elements. For a heavy feedback as described below an application of multiple receive antennas at the first base station BS1 is preferable.

The term "mobile station" may be considered synonymous to, and may hereafter be occasionally referred to, as a mobile unit, mobile user, access terminal, user equipment, subscriber, user, remote station etc.

The first mobile station MS1 and the second mobile station MS2 may be for example cellular telephones, LTE smart phones, portable computers such as notebooks with a WLAN and/or an LTE interface card, USB data sticks with a WLAN and/or an LTE interface, pocket computers, hand-held computers, personal digital assistants, or integrated circuits, which can be implemented in any portable device or vehicle such as a car.

The first mobile station MS1 contains a first mobile station antenna system MS1-AS and the second mobile station MS2 contains a second mobile station antenna system MS2-AS. The first mobile station antenna system MS1-AS and the second mobile station antenna system MS2-AS may contain one antenna element or several antenna elements such as two or four antenna elements.

The gateway GW may be located at a border of the radio communication system RCS as shown in Figure 1 and is connected to the first base station BS1 by a first fixed connection line CL1, which may be based for example on a so-called S1 interface such as applied in 3GPP LTE. The gateway GW is exemplarily further connected to the second base station BS2 by a second fixed connection line CL2 and to one or several further external networks by a third fixed connection line CL3.

The first mobile station MS1 is located in the first coverage area CA1 and the second mobile station MS2 is located in the second coverage area CA2.

The first mobile station MS1 may have an active wireless connection with the first base station BS1. The first base station BS1 provides a first wireless transmission WT1 containing first data DATA1 such as user data and/or signalling data to the first mobile station MS1, The first mobile station MS1 may apply for the first wireless transmission WT1 a feedback mechanism and transmits feedback information FB to the first base station BS1 by using a second wireless transmission WT2 to the first base station BS1. The second wireless transmission WT2 may contain besides the feedback information FB second data DATA2 such as further user data and/or further signalling data.

The first base station BS1 and the first mobile station MS1 may be configured with two or more feedback modes for transmitting the feedback information FB from the first mobile station MS1 to the first base station BS1 for example according to following table 1 :

Table 1 for various feedback modes applicable between the first mobile station MS1 and the first base station BS1

| Indicator of feedback mode | Name of feedback mode | Set of predefined feedback parameters | Unused radio resources URR [kbit/sec] |
|---|---|---|---|
| 1 | Heavy feedback mode | All or more than 50 % of all coefficients of a channel matrix of the first wireless transmission WT1 of every radio resource element (e.g. of every PRB) or a group of radio resource elements (e.g. a group of PRBs) | URR ≥ PV1 |
| 2 | Light feedback mode | one or two of the following parameters for every PRB or a group of PRBs: a channel quality indicator, a signal-to-noise-ratio, a signal-to-noise-and-interference-ratio, at least one index from a group of at least two pre-coding vectors | URR ≤ PV2 |
| 3 | Medium feedback mode | less than 50 % of all coefficients $h_{ij}$ of a channel matrix $H$ of the first wireless transmission WT1 of every PRB or a group of PRBs and/or two or more of the following parameters for every PRB or a group of PRBs: a channel quality indicator, a signal-to-noise-ratio, a signal-to-noise-and-interference-ratio, at least one index from a group of at least two pre-coding vectors | PV2 ≥ URR ≥ PV1 |

An optimum downlink transmission method for SU-MIMO (SU-MIMO = Singe User - Multiple Input Multiple Output) is SVD based precoding (SVD = Singular Value Decomposition) with optimal power allocation. By applying this transmission method, a precoding matrix is designed based on singular vectors of an instantaneous channel matrix $\underline{H}$. The channel matrix $\underline{H}$ is composed of complex coefficients $h_{ij}$. A size of the channel matrix $\underline{H}$ depends on a number of antenna elements at a transmitter and a further number of antenna elements at a receiver. Exemplarily, for a highly scattered environment with two antenna elements at the transmitter and further two antenna element at the receiver the size of the channel matrix $\underline{H}$ is a total of 4 complex coefficients $h_{11}$, $h_{12}$, $h_{21}$, $h_{22}$.

In a narrowband flat-fading channel with multiple transmit and receive antennas, a wireless transmission system between the first base station antenna system BS1-AS and the first mobile station antenna system MS1-AS can be mathematically described as:

$$\vec{y} = \underline{H} \bullet \vec{x} + \vec{n} \qquad (1)$$

with:

$\bar{y}$ : receive vector,

$\underline{\underline{H}}$ : the channel matrix with the matrix coefficients $h_{ij}$,
$\underline{x}$ : transmit vector,
$\underline{n}$ : noise vector.

The transmit vector is known at the first mobile station MS1 because of a transmission of predefined reference signals, also known as pilots. The receive vector is measured at the first mobile station MS1. Entries in the noise vector may be assumed to be Gaussian random variables with zero mean and variance '□2'. In a real system this represents the thermal noise at each antenna. By knowing these three vectors all matrix coefiicients $h_{ij}$ of the channel matrix $\underline{\underline{H}}$ can be determined at the first mobile station MS1 preferably for each PRB (e.g. a group of 14 adjacent OFDM symbols (OFDM = Orthogonal Frequency Division Multiplexing) of 12 adjacent subcarriers using a short cyclic prefix or a group of 6 adjacent OFDM symbols of 12 adjacent subcarriers using a long cyclic prefix) within a predefined frequency range such as 1.25 MHz, 2.5 MHz, 5.0 MHz, 10.0 MHz, 15.0 MHz or 20.0 MHz or even for each OFDM symbol of each subcarrier of a sub-range of the predefined frequency range. A transmission of all or more than 50% of the determined matrix coefficients $h_{ij}$ may be called a heavy feedback mode in the following (see Table 1).

A feedback mode such as the well-known fixed code-book based feedback method, which is for example described in 3GPP TS 36.211, may be called a light feedback mode in the following. Thereby, a channel quality indicator, a signal-to-noise-ratio, a signal-to-noise-and-interference-ratio or at least one index from a group of at least two pre-coding vectors is reported as channel feedback for each PRB or a group of adjacent PRBs (see Table 1).

Optionally as an additional feedback mode, a mixture with components of the heavy feedback mode and the light feedback mode may be called a medium feedback mode in the following (see Table 1). According to further alternatives, the Medium Feedback Mode may contain all but compressed channel coefficients or may contain only a required eigenvector of the channel matrix.

The feedback modes as shown in Table 1 may be shown for a same frequency of reporting for the feedback information.

As an additional parameter (not shown in Table 1 for simplification) the heavy, medium or light feedback modes may be preferably further characterized by a frequency of the reporting of the feedback information for example in milliseconds. In such a case a reporting of feedback information as shown for the heavy feedback mode in Table 1 with a first frequency and a further reporting of feedback information as shown for the light feedback mode in Table 1 with a 10 times or 50 times larger frequency then the first frequency may require a same amount of radio resources. The method according to the invention allows to adapt a reporting frequency as needed. For example in case of the heavy feedback mode, the first mobile station MS1 may transmit a feedback in every TTI (TTI = Transmission Time Interval). In case of the light feedback mode, the first mobile station MS1 may transmit a feedback once for every frame; e.g. every 10 ms. In case of the medium feedback mode, the first mobile station may transmit a feedback may be twice in every frame.

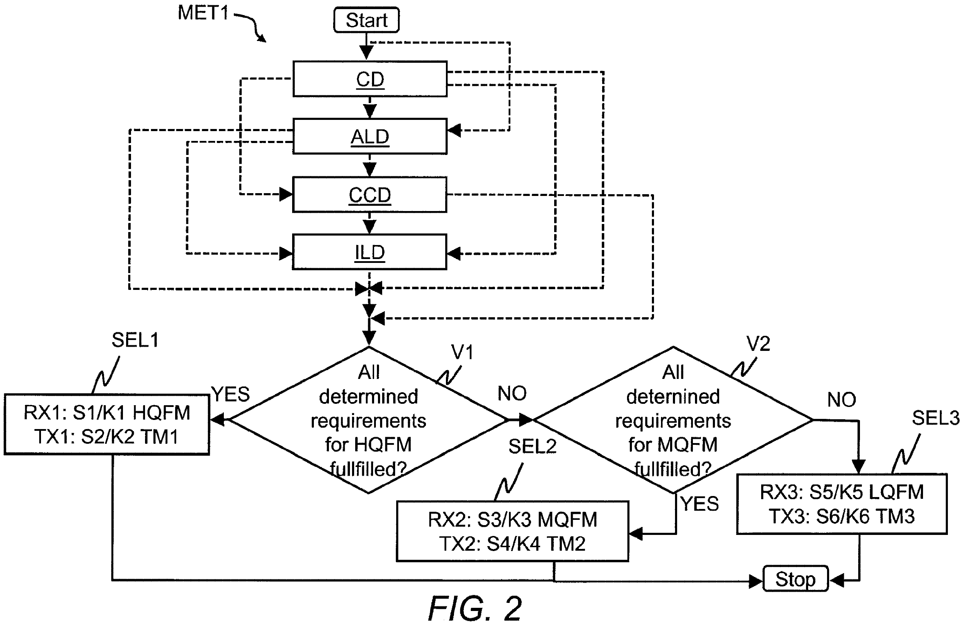

From the first data DATA1, which have been received by the first wireless transmission WT1, exemplarily the first base station BS1 may be able to determine a context of the first data DATA1. The context determination and further alternatives are described in more detail by Figure 2, Figure 3, Figure 4 and Figure 5 and corresponding description.

Alternatively or additionally, the first mobile station MS1 or the first base station BS1 may determine a utilization of radio resources on a radio link from the first mobile station MS1 to the first base station BS1. The utilization of radio resources results from an application of the second wireless transmission WT2 from the first mobile station MS1 to the first base station BS1. If for example only the feedback information of a current transmission mode is transmitted to the first base station BS1, the utilization of radio resources may be low, even if currently a light feedback mode may be applied. Otherwise if for example the feedback information of a current transmission mode and a video upload is transmitted to the first base station BS1, the utilization of radio resources may be high.

Based on the context or the utilization of radio resources or based on both, the context and the utilization of radio resources, the first base station BS1 keeps a current feedback mode or selects a feedback mode, which is different to a currently applied feedback mode.

As a further input parameter for the selection process at the first base station BS1, one or more parameters such as SNR or SINR or CQI of a channel condition of the first wireless transmission WT1 from the first base station BS1 to the first mobile station may be determined for example with help of reference signal or pilot signal strength measurements. Such parameters can be used to determine a radio link quality or channel link quality for the first wireless transmission WT1.

Following table 2 shows in a third column several requirements, which exemplarily must be fulfilled for selecting a corresponding feedback mode. If a table entry is missing, then no requirement exists regarding the first distance D1.

Table 2 for signal quality and interference requirements regarding the various feedback modes The third column of Table 2 may contain for example three predefined SINR values SINR1, PSINR2, PSINR3 with PSINR1 > PSINR2 > PSINR3. This means that the measured SINR value must be at least as large as a listed predefined SINR values that a corresponding feedback mode will be selected.

| Indicator of feedback mode | Name of feedback mode | SINR | Interference level (IL) |
|---|---|---|---|
| 1 | Heavy feedback mode | SINR > PSINR1 | IL ≤ PIL1 |
| 2 | Light feedback mode | SINR ≥ PSINR3 | |
| 3 | Medium feedback mode | SINR ≥ PSINR2 | IL ≤ PIL2 |

As a further alternative, the table 2 may contain for the heavy feedback mode a requirement that a first distance D1 between the first base station BS1 and the first mobile station M1 must be smaller than a first predefined distance PD1, which may be given in meters.

The first distance D1 may be measured for example by knowing static positions of the first base station BS1 and the second base station BS2 and by performing well-known triangulation with respect to radio frequency signals, which have been transmitted from the first mobile station MS1 and which have been received at the first base station BS1 and the second base station BS2. The first distance D1 may be alternatively measured by well-known propagation time measurements or by applying a well-known space-based satellite navigation system and corresponding receivers such as GPS receivers (GPS = Global Positioning System) in the first base station BS1 and the first mobile station MS1.

The fourth column of Table 2 may preferably contain for example two predefined interference level values PIL1, PIL2 with PIL1 < PIL2. This means for the heavy feedback mode and the medium feedback mode that a measured interference value must be below the listed predefined interference value that a corresponding feedback mode will be selected.

If a table entry is missing as can be seen for the light feedback mode, then no requirement exists regarding the interference level.

The interference level of an application of a feedback mode on radio frequency signals received by the second mobile station MS2 or by the second base station BS2 in the second coverage area CA2 may be determined and estimated for example by interference measurements (e.g. based on determining SINR values) at the second mobile station MS2 and/or the second base station BS2 regarding a reception of uplink radio frequency signals, which have been transmitted from the first mobile station MS1. Results of these interference measurements may be reported from the second mobile station MS2 via the second base station BS2 to the first base station BS1 or directly from the second base station BS2 to the first base station BS1. Especially in case of the heavy feedback mode a considerable amount of additional interference might be induced by the feedback mode. If a current interference in a neighboring radio cell is already above or just under a predefined interference threshold without using a heavy feedback mode for the first mobile station MS1, the additional interference might be not acceptable for the second base station BS2. In such a case, the first base station BS1 might decide not to switch to a heavy feedback mode for the first mobile station MS1.

Therefore, selecting step for the feedback mode may be further based on a comparison of the determined interference level with the predefined interference levels listed in the Table 2.

Alternatively or additionally, a second distance D2 between the first mobile station MS1 and a virtual border BD may be determined, which separates the first coverage area CA1 from the second coverage area CA2. A position and course of the virtual border BD may depend on current transmission powers applied by the first base station BS1 and the second base station BS2, may depend on a geographical surface form of the first coverage area CA1 and the second coverage area CA2, may depend on a building density within the first coverage area CA1 and the second coverage area CA2 and/or may depend on a horizontal beamforming or a vertical beamforming applied by the first base station antenna system BS1-AS or the second base station antenna system BS2-AS.

The second distance D2 may be observed to avoid an excess inter-cell interference. If for example, the first mobile station MS1 may apply the heavy feedback mode, the interference coming from the transmission of the feedback information may cause too much interference for the second mobile station MS2, so that the second mobile station MS2 may have many problems in receiving downlink data error-free from the second base station BS2.

Exemplarily, several pre-calculated positions and courses of the virtual border BD may be stored in a database for various combinations and values of the factors given in the preceding sentence. For performing such pre-calculations well-known network planning tools may be applied.

The invention is now described in more detail with respect to Figure 2 and corresponding description.

Referring to Figure 2 a flow diagram of a generic method MET1 in accordance to several embodiments of the invention is shown. The number of the steps for performing the method MET1 is not critical, and as can be understood by those skilled in the art, that the number of the steps and the sequence of the steps may vary without departing from the scope of the present invention as defined in the appended claims, e.g. some of the steps may be performed simultaneously (e.g. steps CCD and ILD), some of the steps may be performed in an inverse sequence (e.g. steps CCD and ILD may be performed before steps CD and/or ALD are performed), some of the steps may be alternative steps (e.g. steps CD or ALD) or some of the steps may be ignored (e.g. V2 and S2).

The method MET1 may be performed for example, if the first mobile station MS1 establishes an active data connection with the first base station BS1. The method MET1 may be also performed repeatedly with a predefined time period to improve the active data connection between the first base station BS1 and the first mobile station MS1.

The method MET1 is described regarding a feedback for a downlink wireless transmission from the first base station BS1 to the first mobile station MS1. Alternatively, the method MET1 may be also applied regarding a feedback for an uplink wireless transmission from the first mobile station MS1 to the first base station BS1, regarding a feedback for a downlink wireless transmission from the second base station BS2 to the first mobile station MS1, e.g. in case of multi-cell cooperative and/or coordinated and/or joint and/or coherent transmissions, regarding a feedback for a wireless transmission between two mobile stations in a so-called ad-hoc wireless network (not shown in Figure 1), regarding a feedback for a wireless transmission between two base stations such as the first base station BS1 and the second base station BS2 (not shown in Figure 1), regarding a feedback for a wireless transmission from a base station to a wireless relay station or from the wireless relay station to the base station (not shown in Figure 1) or regarding a feedback for a wireless transmission from the wireless relay station to a mobile station or from the mobile station to the wireless relay station (not shown in Figure 1). A wireless relay station usually relays wireless transmissions coming from a mobile station to a base station or wireless transmissions coming from a base station to a mobile station.

The dashed arrows shown in Figure 2 provide several alternative process flows, which can be applied to perform the method MET1.

The method MET1 may start with a determination of the context of the first data DATA1 (step CD). The context may be determined for example by a so-called cross layer interaction. The cross layer interaction allows to share information between different layers of the so-called OSI model (OSI = Open Systems Interconnection; see for example http.//en.wikipedia.org/wiki/OSI_model). Therefore, between two layers such as the application layer, the transport layer, the data link layer or the physical layer two interfaces are created to enable a flow of information from one layer to the other layer. Exemplarily, an application server, which has functionality at the application layer may extract the context in terms of type of application e.g. video streaming. The application layer then forwards this information to the IMS (IMS = IP Multimedia Subsystem) using IMS session signaling messages. The IMS can further provide this information to the transport layer. Further the data link layer in the first base station BS1 gets the information from the transport layer.

Alternatively, the context may be determined by a packet header analysis. For the packet header analysis, a data packet such as an IPv6 packet (IPv6 = Internet Protocol version 6) may be analyzed by inspecting the so-called Next Header, which includes an indication for a type of a next header such as TCP (type 6; TCP = Transmission Control Protocol) or UDP (type 17; UDP = User Datagram Protocol). The TCP header and the UDP header can be further analyzed by inspecting the port numbers; e.g. FTP (FTP = File Transfer Protocol) uses a TCP port number 20, HTTP (HTTP = Hypertext Transfer Protocol) uses a TCP port number 80). The port number may be an indicator for an application layer format such as SIP (SIP = Session Initiation Protocol), DNS (DNS = Domain Name System), FTP, HTTP, NFS (NFS = Network File System), NTP (NTP = Network Time Protocol), SMPP (SMPP = Short Message Peer-to-Peer), SMTP (SMTP = Simple Mail Transfer Protocol), SNMP (SNMP = Simple Network Management Protocol), Telnet, DHCP (DHCP = Dynamic Host Configuration Protocol) or RTP (RTP = Real-time Transport Protocol). The application layer format then provides a hint for the context of the data.

The context of the data, which is determined by one of the above described alternative steps, may be a service-type, an application-layer-type or a transport-layer-type of the data. The service-type may be for example video, web browsing, download file transfer, upload file transfer, voice of IP, etc. The application-layer-type may be for example SIP, DNS, FTP, HTTP, NFS, NTP, SMPP, SMTP, SNMP, Telnet, DHCP or RTP. The transport-layer-type may be for example TCP, UDP, SCTP (SCTP = Stream Control Transmission Protocol) or RSVP (RSVP = Resource reservation protocol).

The method MET1 may alternatively start with a determination of the utilization of radio resources on the radio link from the first mobile station MS1 to the first base station BS1 (step ALD) or the utilization of radio resources is determined in addition to the context of the data DATA1. The utilization of radio resources may be determined for example by determining preferably at a physical layer a magnitude of allocated radio resources such as PRBs used in LTE for the radio link from the first mobile station MS1 to the first base station BS1. From knowledge of total available radio resources and the magnitude of allocated radio resources the magnitude of unused radio resources URR can be deduced.

Alternatively, the utilization of radio resources may be determined by determining directly a magnitude of unused radio resources URR such as PRBs for the radio link from the first mobile station MS1 to the first base station BS1. If the magnitude of unused radio resources is high, the utilization of radio resources is deduced to be low and if the magnitude of unused radio resources is low, the utilization of radio resources is deduced to be high. The utilization of radio resources may be determined directly at the first base station BS1 or alternatively at the first mobile station MS1, which reports information about the utilization of radio resources such as used or unused radio resources to the first base station BS1.

In a further optional step CCD, the one or several channel condition parameters of the first wireless transmission WT1 may be determined.

In an even further optional step ILD, the interference level of the application of the feedback mode on radio frequency signals received by the second mobile station MS2 or by the second base station BS2 in the second coverage area CA2 may be determined.

In a further step V1, it is verified, which of the determined parameters such as the context, the utilization of radio resources, the one or several channel condition parameters, and/or the interference level fulfill the requirements as shown in Table 1 and Table 2 for the heavy feedback mode HQFM. Only requirements of those parameters may need to be verified, which have been determined in the previous steps CD, ALD, CCD, and/or ILD. If for example all requirements for the heavy feedback mode HQFM are fulfilled, the method MET1 may proceed with step SEL1. If not all requirements for the heavy feedback mode HQFM are fulfilled, the method MET1 may proceed with step V2.

By proceeding with the step SEL1, the method MET1 switches (indicated by S1 in Figure 2) from a preset feedback mode or from a former selected feedback mode to the heavy feedback mode HQFM or keeps (indicated by K1 in Figure 2) the heavy feedback mode HQFM, if it is already applied. The preset feedback mode may be for example the light feedback mode LQFM.

As a result of the step SEL1, the first base station BS1 receives (indicated by RX1 in Figure 2) feedback information by the heavy feedback mode HQFM.

Preferably, a transmission mode for the wireless transmission WT1 of the first data DATA1 from the first base station BS1 to the first mobile station MS1 is adapted to the selected feedback mode. This means, that the first base station BS1 may switch (indicated by S2 in Figure 2) from a preset transmission mode or from a former selected current transmission mode to a first transmission mode TM1 or may keep the first transmission mode TM1 regarding the selected or kept heavy feedback mode HQFM. The preset transmission mode may be for example a third transmission mode TM3, which is related to the light feedback mode LQFM (see Table 3).

Thereby, as a further result of the step SEL1, the first base station BS1 transmits (indicated by TX1 in Figure 2) the first user data DATA1 with the first transmission mode TM1.

Exemplarily, possible relations between the feedback modes given in Table 1 and Table 2 and various types of transmission modes are given in Table 3.

Table 3 for a relation between feedback modes and transmission modes

| Indicator of feedback mode | Name of feedback mode | Type of transmission mode |
|---|---|---|
| 1 | Heavy feedback mode | TM1 |
| 2 | Light feedback mode | TM2 |
| 3 | Medium feedback mode | TM3 |

A first transmission mode TM1 for the heavy feedback mode may be for example an SVD (SVD = Singular Value Decomposition) based transmit precoding with optimum power allocation. In case of single user multi stream transmission, the first mobile station MS1 may transmit all coefficients of the channel matrix $\underline{H}$ (see Table 1 and equation (1)) to the first base station BS1. The first base station BS1 may calculate an optimum power allocation matrix and a precoding matrix by using the SVD of the channel matrix $\underline{H}$, which can be given as (see for example: IEEE TRANSACTIONS ON WIRELESS COMMUNICATIONS, VOL. 4, NO. 2, MARCH 2005 757 MIMO Transmission Over a Time-Varying Channel Using SVD Guillaume Lebrun, Student Member, IEEE, Jason Gao, Member, IEEE, and Michael Faulkner, Member, IEEE; section II. MIMO SYSTEM USING SVD):

$$\underline{H} = \underline{U}\,\underline{\Sigma}\,\underline{V}^{H} \qquad (2)$$

with:

$\underline{U}$, $\underline{V}^{H}$ : unitary matrices whose columns are the eigen vectors of $H^{H}H$ and $HH^{H}$ respectively.

$\underline{\Sigma}$ : diagonal matrix that contains the eigenvalues of $H^H H$.

$\underline{V}$ is used as the precoding matrix and $\underline{\Sigma}$ is used for optimum power allocation. By using the first transmission mode TM1 a specific pre-coding vector may be calculated and used for the first mobile station MS1 contrary to a predefined pre-coding vector, which may be used for a second transmission mode TM2. Furthermore, the first transmission mode TM1 may be characterized by calculating and applying an optimum transmission power for each antenna element of the first base station antenna system BS1-AS (see for example "Optimal Power Allocation in SVD Equalized Multicarrier Systems" Andreas Ahrens, Christoph Lange, Volker Kühn Tobias Weber; Proc. IEEE International Conference on Communications (ICC), Glasgow, UK, 2007; section II. SYSTEM MODEL AND QUALITY CRITERIA).

The second transmission mode TM2 for the light feedback mode may be for example - assuming a single user single stream transmission - based on codebooks, which are predefined at the first base station BS1 and the first mobile station MS1. The first mobile station MS1 may determine the SVD of the channel matrix $\underline{H}$ and determines the unitary matrix $\underline{V}$. Then, the first mobile station MS1 may search in the predefined codebook for a vector, which is closest to the dominant eigenvector in V and then the first mobile station MS1 may send to the first base station BS1 an index of a pre-coding vector, which has been determined by this search procedure. Alternatively, the first mobile station MS1 may directly search for apre-coding vector in the predefined codebook that provides the highest SINR and reports report the index of that pre-coding vector to the first base station BS1. In a next step, the first base station BS1 applies the predefined pre-coding vector, which has been reported by the first mobile station MS1. By using the second transmission mode TM1 a predefined pre-coding vector may be used for the first mobile station MS1. Furthermore, the second transmission mode TM2 may be characterized by applying equal transmission powers for each antenna element of the first base station antenna system BS1-AS,

A third transmission mode TM3 for the medium feedback mode may be for example - assuming a single user single stream transmission - based on codebooks, which are predefined at the first base station BS1 and the first mobile station MS1. The first mobile station MS1 may determine the SVD of the channel matrix $\underline{H}$ and determines the unitary matrix $\underline{V}$. Then, the first mobile station MS1 may search in the predefined codebook for a vector, which is closest to the dominant eigenvector in V and then the first mobile station MS1 may send to the first base station BS1 an index of a pre-coding vector, which has been determined by this search procedure. Alternatively, in case of a single user multi stream transmission - the first mobile station MS1 may apply some compression technique over the channel matrix $\underline{H}$ (for the compression technique see for example: "A Rake-Finger Based Efficient Channel State Information Feedback Compression Scheme for the MIMO OFDM FDD Downlink", Thorsten Wild, Vehicular Technology Conference (VTC 2010-Spring), 2010 IEEE 71st, 16-19 May 2010) and transmits the compressed form of the channel matrix $\underline{H}$ to the first base station BS1. Then, the first base station BS1 may perform the same methods as explained for the first transmission mode TM1. However, due to the compression, the amount of feedback is reduced. By using the third transmission mode TM3 a specific pre-coding vector may be calculated and used for the first mobile station MS1 as for the first transmission mode TM1. Furthermore, the third transmission mode TM3 may be characterized by applying equal transmission powers for each antenna element of the first base station antenna system BS1-AS.

In the further step V2, it is verified, which of the determined parameters such as the context, the utilization of radio resources, the one or several channel condition parameters and/or the interference level fulfill the requirements as shown in Table 1 and Table 2 for the medium feedback mode MQFM. Only requirements of those parameters may need to be verified, which have been determined in the previous steps CD, ALD, CCD, and/or ILD. If for example all requirements for the medium feedback mode MQFM are fulfilled, the method MET1 may proceed with step SEL2. If not all requirements for the medium feedback mode MQFM are fulfilled, the method MET1 may proceed with step SEL3.

By proceeding with the step SEL2, the method MET1 switches (indicated by S3 in Figure 2) from the preset feedback mode or from the former selected feedback mode to the medium feedback mode MQFM or keeps (indicated by K3 in Figure 2) the medium feedback mode MQFM, if it is already applied.

As a result of the step SEL2, the first base station BS1 receives (indicated by RX2 in Figure 2) feedback information by the medium feedback mode MQFM.

Similar as described above, the transmission mode for the first wireless transmission WT1 of the first data DATA1 from the first base station BS1 to the first mobile station MS1 is adapted to the selected feedback mode. This means, that the first base station BS1 may switch (indicated by S4 in Figure 2) from the preset transmission mode or from the former selected current transmission mode to a second transmission mode TM2 or may keep the second transmission mode TM2 regarding the selected or kept medium feedback mode MQFM. Thereby as a further result of the step SEL2, the first base station BS1 transmits (indicated by TX2 in Figure 2) the first user data DATA1 with the second transmission mode TM2.

By proceeding with the step SEL3, the method MET1 switches (indicated by S5 in Figure 2) from the preset feedback mode or from the former selected feedback mode to the light feedback mode LQFM or keeps (indicated by K5 in Figure 2) the light feedback mode LQFM, if it is already applied.

As a result of the step SEL3, the first base station BS1 receives (indicated by RX3 in Figure 2) feedback information by the light feedback mode LQFM.

Similar as described above, the transmission mode for the wireless transmission WT1 of the first data DATA1 from the first base station BS1 to the first mobile station MS1 is adapted to the selected feedback mode. This means, that the first base station BS1 may switch (indicated by S6 in Figure 2) from the preset transmission mode or from the former selected current transmission mode to a third transmission mode TM3 or may keep the third transmission mode TM3 regarding the selected or kept light feedback mode LQFM. Thereby as a further result of the step SEL2, the first base station BS1 transmits (indicated by TX3 in Figure 2) the first user data DATA1 with the third transmission mode TM3.

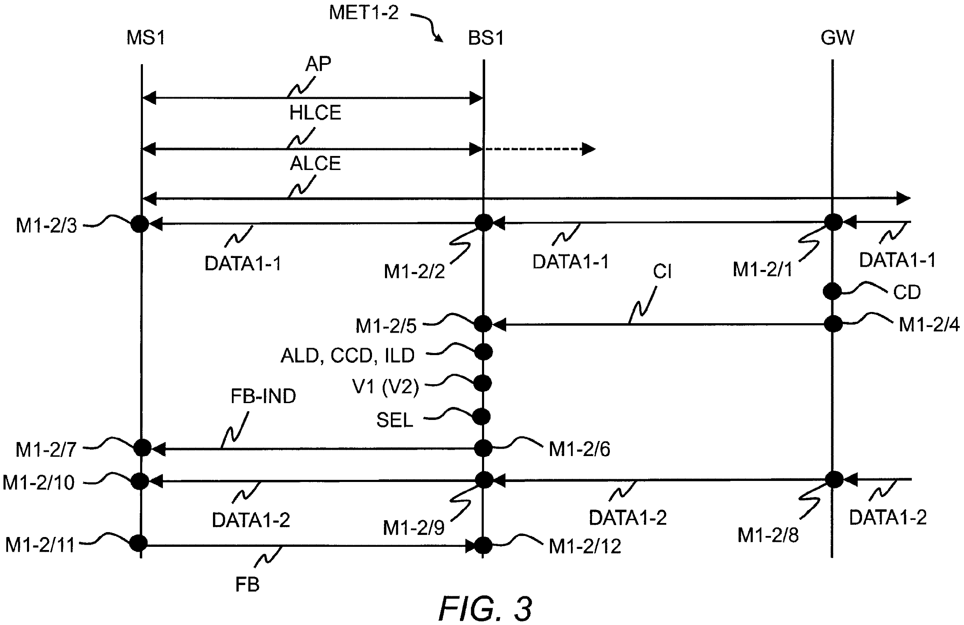

Referring to Figure 3 a flow diagram of a method MET1-2 of an embodiment regarding the generic method MET1 of Figure 2 is shown. Steps identical in method MET1 and method MET1-2 and network nodes identical in Figure 1 and Figure 3 have been designated with same reference numerals.

The method MET1-2 is executed by the first mobile station MS1, by the first base station BS1 and by the gateway GW. For a person skilled in the art it is clear, that the method MET1-2 may be extended with respect to further mobile stations, further base stations, and further gateways. It is also clear, that the first wireless transmission WT1 and the corresponding feedback mode may be executed between other network nodes as described above.

If the first mobile station MS1 is in an idle mode with no active radio link and if a user of the first mobile station MS1 requests a service such as web browsing, in a first step AC, a radio access process is executed between the first mobile station MS1 and the first base station BS1. In case of LTE, such a known radio access process is described for example in section 10.1.5 of the standard specification 3GPP TS 36.300 V10.6.0 (2011-12). In a further step HLCE, a connection establishment for higher layers such as described in section 6.1.1 of the standard specification 3GPP TS 25.303 V9.0.0 (2009-12) is executed between the first mobile station MS1 and the first base station BS1 and additionally between the first mobile station MS1 and a further network node of the radio communication system RCS such as an MME (MME = Mobility Management Entity) in LTE (indicated by the dotted arrow in Figure 3). In case of LTE, such a known connection establishment for higher layers is described for example in section 19.2.2.3 of the standard specification 3GPP TS 36.300 V10.6.0 (2011-12).

When the connection establishment for the higher layers is finished, an active connection between the first mobile station MS1 and the radio communication system RCS has been built up.

In a next step ALCE, a connection for the application layer may be established between the first mobile station MS1 and an application server such as a video server. The application server is not shown in Figure 3 for simplification. A specific connection establishment depends on the specific Internet protocol applied such as FTP or HTTP (see also above).

For the following it is exemplarily assumed, that a user of the first mobile station MS1 has requested a video stream. The video stream in a high quality such as applied for DVD videos (DVD = Dissociated Vertical Deviation) is based on an MPEG-2 format transport stream, which requires a high audio and video bit data rate with a video peak bit rate of 9.8 Mbit/s, a total peak bit rate of 10.08 Mbit/s and a minimum bit rate of 300 kbit/s (see http://en.wikipedia.org/wiki/MPEG-2). If the user only request the video stream and does not request any other services, almost no radio resources except for signaling are used for the radio link from the first mobile station MS1 to the first base station BS1.

When the application layers are connected, first user data DATA1-1 such as UDP packets of the video stream may be received at the gateway GW in a further step M1-2/1. Besides a further processing of the first user data DATA1-1 as described below, the first user data DATA1-1 are forwarded to the first base station BS1 and are received at the first base station BS1 in a next step M1-2/2. The first base station BS1 applies for example the preset transmission mode for the first user data DATA1-1 and transmits the first user data DATA1-1 by the first wireless transmission WT1 to the first mobile station MS1, which receives the first user data DATA1-1 in a further step M1-2/3.

The gateway GW determines the context of the first user data DATA1-1 as described above regarding Figure 2 in a next step CD.

In a further step M1-2/4, the gateway GW transmits information CI of the context to the first base station BS1, which receives the information CI in a next step M1-2/5. The information CI contains for example an indication, that the first user data DATA1-1 are transmitted with the UDP protocol. Optionally, in next steps the first base station BS1 may execute one, several or all of the steps ALD, CCD, ILD as described above regarding Figure 2.

In further steps, the first base station BS1 executes step V1 as described above regarding Figure 2 and also step V2 as described above regarding Figure 2, if the requirements for the heavy feedback mode HQFM are not fulfilled.

In a multi user environment with a shared uplink from mobile stations to the first base station BS1 such as shown in Figure 1, the utilization of radio resources is preferably determined at the first base station BS1 as a total of uplink transmissions from a group of mobile stations or all mobile stations served by the first base station BS1 in the first coverage area CA1.

As a result of the step V1 or the steps V1 and V2, the first base station BS1 selects at step SEL the heavy feedback mode HQFM (SEL = SEL1) for the first mobile station MS1, which might fit to the UDP protocol applied to the first user data DATA1-1 because video downloads usually use the UDP protocol and because video downloads don't generate uplink traffic from the first mobile station MS1 to the first base station BS1.

Preferably, the first base station BS1 also selects in step SEL a new transmission mode, which fits to a new selected feedback mode. For the given example, the first base station BS1 selects the first transmission mode TM1, which fits to the heavy feedback mode HQFM (see Figure 2).

In a further step M1-2/b, the first base station BS1 transmits an indication FB-IND for the selected feedback mode to the first mobile station MS1, which receives the indication in a next step M1-2/7. The indication FB-IND may be for example a two-bit identifier in case of three applicable feedback modes. Exemplarily, the indication FB-IND may be transmitted based on the well-known RRC protocol (RRC = Radio Resource Control) such as applied in 3GPP LTE. Alternatively, messages via control channels such as the Physical Uplink Control Channel or the Physical Uplink Shared Control Channel as used in 3GPP LTE (see for example 3GPP TS 36.213 V10.3.0 (2011-09) or 3GPP TS 36.211 V10.0.0 (2010-12) may be applied to transmit the indication FB-IND of the selected feedback mode.

Further first user data DATA1-2 may be received at the gateway GW in a further step M1-2/8, which are forwarded to the first base station BS1 and are received at the first base station BS1 in a next step M1-2/9. The first base station BS1 applies now the first transmission mode TM1 for the further first user data DATA1-2 and transmits the further first user data DATA1-2 to the first mobile station MS1, which receives the further first user data DATA1-2 in a further step M1-2/10.

In a next step M1-2/11, the first mobile station MS1 transmits feedback information FB to the first base station BS1 by applying the heavy feedback mode HQFM. In a further step M1-2/12, the first base station BS1 receives the feedback information FB. The heavy feedback mode HQFM may use radio resources dedicated for control information but may also use in addition or alternatively radio resources dedicated for user data.

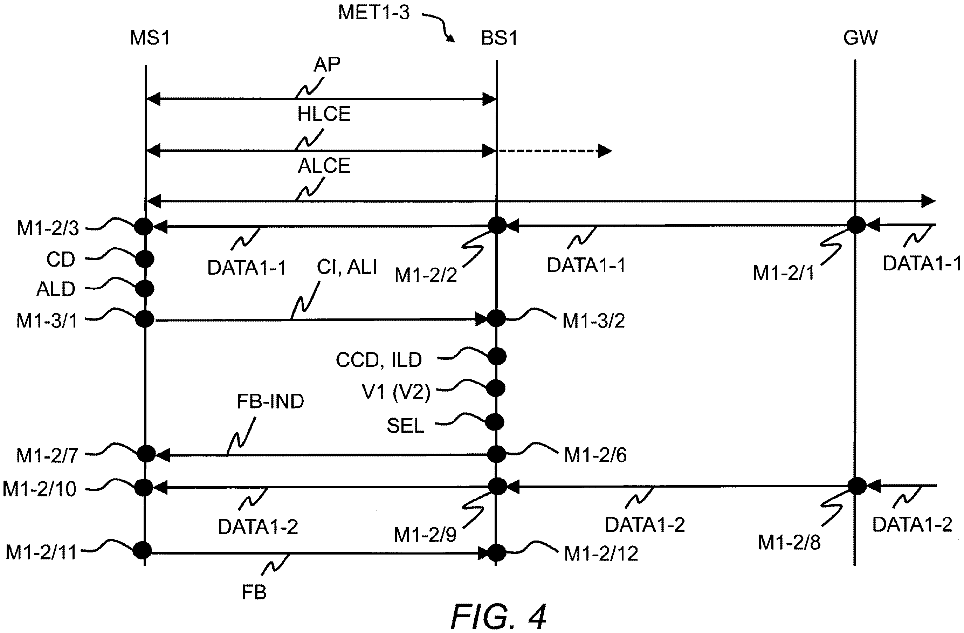

Referring to Figure 4 a flow diagram of a method MET1-3 of a further embodiment regarding the generic method MET1 of Figure 2 is shown. Steps identical in method MET1-3 and method MET1-2 and network nodes identical in Figure 1 and Figure 4 have been designated with same reference numerals. The method MET1-3 differs from the method MET1-2 in the execution of the context determination, the utilization of radio resources determination and the transmission of the context information CI. The context determination is performed in step CD by the first mobile station MS1 and the context determination may be based for example on an internal communication between an operating system such as Windows Mobile, Android, BlackBerry OS or Symbian OS running at the first mobile station MS1 and a radio interface of the first mobile station MS1 used for the radio communication with the first base station BS1. An API (API = Application Program interface) may be applied for example for such an internal communication.

The operating system may monitor applications running at the first mobile station MS1. If an application is started at the first mobile station MS1, which requires a data connection to an external network node by a wireless transmission, the operating system may send an indication for the application such as VID for a video application via the API to the data link layer.

In a further step M1-3/1, the first mobile station MS1 transmits the information CI of the context to the first base station BS1, which receives the information CI in a next step M1-3/2.

Alternatively, the first mobile station MS1 may also determine in step ALD the utilization of radio resources of the radio link to the first base station MS1, may determine based on the utilization of radio resources, that another one than a currently applied feedback mode might be more suitable and may transmit by the step M1-3/1 a request to the first base station BS1 for a verification of the currently applied feedback mode. In such a case, the first base station BS1 may transmit an answer to the first mobile station in the step M1-2/6 with the indication FB-IND of a possibly new selected feedback mode. According to a further alternative, the first mobile station MS1 may also transmit information ALI of the utilization of radio resources to the first base station BS1 in the step M1-3/1. The information ALI may be for example a two-bit indication for "high activity", "medium activity" or "low activity".

All other steps may be performed as described regarding Figure 3.

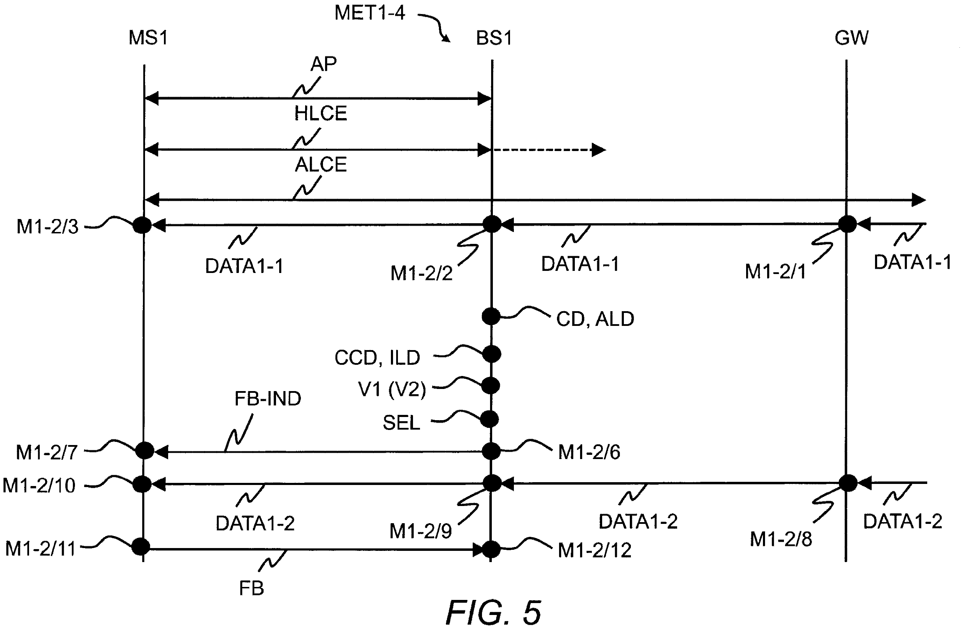

Referring to Figure 5 a flow diagram of a method MET1-4 of a further embodiment regarding the generic method MET1 of Figure 2 is shown. Steps identical in method MET1-4 and method MET1-2 and network nodes identical in Figure 1 and Figure 4 have been designated with same reference numerals. The method MET1-4 differs from the method MET1-2 in the execution of the context determination and the transmission of the context information CI. The context determination (step CD) and/or the determination of the utilization of radio resources (step ALD) is/are performed by the first base station BS1. In such a case no transmission of the information CI of the context is required neither from the gateway GW nor from the first mobile station MS1.

The verification steps V1 and V2 may be further based on information from higher layers such as statistics of allocated physical radio resources or on scheduling information from a scheduler of a transceiver of the first base station BS1 for an amount of next second data DATA2 to be transmitted on the uplink from the first mobile station MS1 and further mobile stations within the first coverage area CA1. All other steps may be performed as described regarding Figure 3.

The statistics of the allocated physical radio resources may be based for example on following Table 4:

Table 4 for statistics of allocated physical uplink radio resources per day and time period

| Weekday | Time period | Average free uplink radio resources in percent of available uplink radio resources |
|---|---|---|
| Monday to Friday | 0:00 - 6:00 | 90 |
| Monday to Friday | 6:00-8:00 | 60 |
| Monday to Friday | 8:00 -18:00 | 40 |
| Monday to Friday | 18:00 -24:00 | 50 |
| Saturday | 0:00 - 8:00 | 80 |
| ... | ... | ... |
| Sunday | 21:00-24:00 | 60 |

The number of the steps for performing the methods MET1-2, MET1-3 and MET1-4 is not critical, and as can be understood by those skilled in the art that the number of the steps and the sequence of the steps may vary without departing from the scope of the present invention as defined in the appended claims.

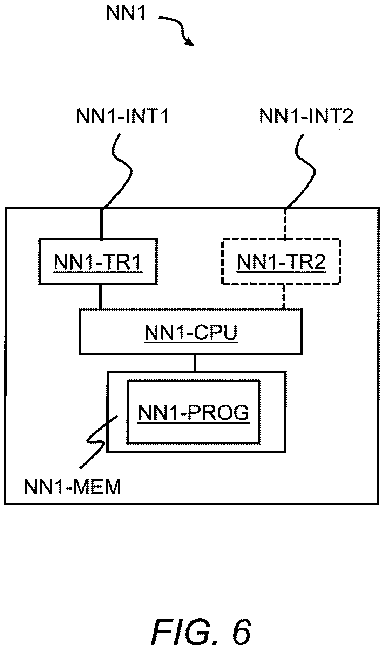

Referring to Figure 6 a block diagram of a first network node NN1 is shown. The first network node NN1 may be for example the first base station BS1. Alternatively, the first network node NN1 may be a mobile station for a wireless communication in a so-called ad-hoc mode with a further mobile station or a relay network node for a wireless communication with a base station or a mobile station.

The first network node NN1 may contain a first interface NN1-INT1, a first transceiver NN1-TR1 connected to the first interface NN1-INT1, a CPU NN1-CPU connected to the first interface NN1-INT1, and a computer readable medium NN1-MEM. An antenna system such as the first base station antenna system BS1-AS may be connected to the first interface NN1-INT1.

A computer readable program NN1-PROG may be stored at the computer readable medium NN1-MEM. The CPU NN1-CPU is foreseen for executing the computer readable program NN1-PROG. The computer readable program NN1-PROG is foreseen for executing and controlling steps of the methods MET1, MET1-2, MET1-3, MET1-4, which are related to the first network node NN 1.

The computer readable medium NN1-MEM may contain information of the table 1, table 2, table 3 and table 4 in respective data arrays.

If the first network node NN1 is the base station BS1, the first network node NN1 further contains a second interface NN1-INT2 and a second transceiver NN1-TR2 connected to the second interface NN1-INT2 and the CPU NN1-CPU (indicated by dotted lines in Figure 6). The gateway GW may be connected by the fixed connection line CL1 to the second interface NN1-INT2.

The first interface NN1-INT1 and the first transceiver NN1-TR1 are used to perform the access process AP and the connection establishment for higher layers HLCE, to transmit the first data DATA1, DATA1-1, DATA1-2, and the indication FB-IND of the new selected feedback mode and to receive the feedback information FB.

The second interface NN1-INT2 and the second transceiver NN1-TR2 are used to receive the first data DATA1, DATA1-1, DATA1-2 and the information CI of the context.

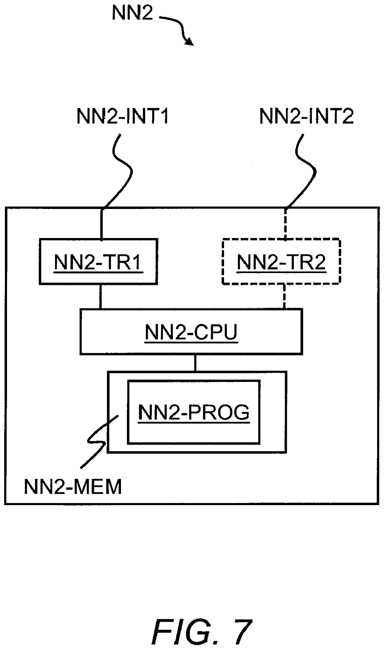

Referring to Figure 7 a block diagram of a second network node NN2 is shown. The second network node NN2 may be for example the first mobile station MS1. Alternatively, the second network node NN2 may be the gateway GW of the radio communication system RCS or an application server. According to further alternatives, the second network node NN2 may be a relay network node for a wireless communication with a base station or a mobile station.

The second network node NN2 may contain a first interface NN2-INT1, a first transceiver NN2-TR1 connected to the first interface NN2-INT1, a CPU NN2-CPU connected to the first interface NN2-INT1, and a computer readable medium NN2-MEM. An antenna system may be connected to the first interface NN2-INT1.

A computer readable program NN2-PROG may be stored at the computer readable medium NN2-MEM. The CPU NN2-CPU is foreseen for executing the computer readable program NN2-PROG. The computer readable program NN2-PROG is foreseen for executing and controlling steps of the methods MET1, MET1-2, MET1-3, MET1-4 which are related to the second network node NN2,

The computer readable medium NN2-MEM may contain information of the table 1 in a respective data array.

The first interface NN2-INT1 and the first transceiver NN2-TR1 are used to perform the access process AP, the connection establishment for higher layers HLCE, and the connection establishment for the application layer LACE, to receive the first data DATA1, DATA1-1, DATA1-2 and the indication FB-IND of the new selected feedback mode to transmit the feedback information FB.

If the second network node NN2 is the gateway GW or a relay network node, the second network node NN2 further contains a second interface NN2-INT2 and a second transceiver NN2-TR2 connected to the second interface NN2-INT2 and the CPU NN2-CPU (indicated by dotted lines in Figure 6).

If the second network node NN2 is the gateway GW for example, the second interface NN2-INT2 and the second transceiver NN2-TR2 are used to receive the first data DATA1, DATA1-1, DATA1-2,

A person of skill in the art would readily recognize that steps of the methods MET1, MET1-2, MET1-3, MET1-4 of the above-described embodiments can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "... unit" or "means for ..." shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET1, MET1-2, MET1-3, MET1-4) for selecting a feedback mode for a wireless transmission (WT1) from a first network node (BS1, NN1) to a second network node (MS1, NN2), said method (MET1, MET1-2, MET1-3, MET1-4) comprising the steps of:

   - determining (CD) a context of data (DATA1) transmitted by said wireless transmission (WT1) or determining (ALD) a utilization of radio resources on a radio link from said second network node (MS1, NN2) to said first network node (BS1, NN1), and
   - selecting (SEL, SEL1, SEL2, SEL3) said feedback mode based on said context and/or on said utilization of radio resources.

2. Method (MET1, MET1-2, MET1-3, MET1-4) according to claim 1, wherein said method (MET1, MET1-2, MET1-3, MET1-4) further comprises the step of determining (ALD) a magnitude of unused radio resources of said radio link from said second network node (MS1, NN2) to said first network node (BS1, NN1) based on said context and/or said utilization of radio resources and wherein said selecting step (SEL, SEL1, SEL2, SEL3) is further based on said determining step (ALD) for said magnitude of unused radio resources.

3. Method (MET1, MET1-2, MET1-3, MET1-4) according to claim 2, wherein said selecting step (SEL, SEL1) selects a heavy feedback mode (HGFM) with a radio resource usage above a first predefined value, if a value of said unused radio resources is above said first predefined value and wherein said selecting step (SEL, SEL3) selects a light feedback mode (LQFM) with a radio resource usage below a second predefined value, if a value of said not-used radio resources is below said second predefined value.

4. Method (MET1, MET1-2, MET1-3, MET1-4) according to claim 3, wherein said heavy feedback mode (HQFM) is a feedback of several or all elements of a channel matrix of said wireless transmission (WT1) from said first network node (BS1, NN1) to said second network node (MS1, NN2) and wherein said light feedback mode (LQFM) is a feedback of at least one of the following parameters of said wireless transmission (WT1) from said first network node (BS1, NN1) to said second network node (MS1, NN2):

   - a channel quality indicator,
   - a signal-to-noise-ratio,
   - a signal-to-noise-and-interference-ratio,
   - at least one index from a group of at least two pre-coding vectors.

5. Method (MET1, MET1-2, MET1-3, MET1-4) according to any of the preceding claims, wherein said context is a service-type, an application-layer-type or a transport-layer-type of said data (DATA1).

6. Method (MET1, MET1-2, MET1-3, MET1-4) according to any of the preceding claims, wherein said context is determined by a cross layer interaction or by a packet header analysis.

7. Method (MET1, MET1-2, MET1-3, MET1-4) according to any of the preceding claims, wherein said determining step (CD) of said context is executed by said first network node (BS1, NN1), or
wherein said determining step (CD) of said context is executed by said second network node (MS1, NN2) and said method (MET1, MET1-3) further comprises the step of transmitting (M1-2/4) information (Ci) of said context from said second network node (MS1, NN2) to said first network node (BS1, NN1), or
wherein said determining step (CD) of said context is executed by a further network node (GW, NN2), wherein said further network node (GW, NN2) is an intermediate node or an end node of a data transmission for said data (DATA1) and said method (MET1, MET1-2) further comprises the step of transmitting (M1-2/4) information (CI) of said context from said further network node (GW, NN2) to said first network node (BS1, NN1).

8. Method (MET1, MET1-2, MET1-3, MET1-4) according to any of the preceding claims, wherein said determining step (ALD) of said utilization of radio resources comprises determining a magnitude of allocated and/or unallocated radio resources for said radio link from said second network node (MS1, NN2) to said first network node (BS1, NN1) and wherein said determining step (ALD) of said utilization of radio resources is executed by said first network node (BS1, NN1) or by said second network node (MS1, NN2).

9. Method (MET1, MET1-2, MET1-3, MET1-4) according to any of the preceding claims, wherein said method (MET1, MET1-2, MET1-3, MET1-4) further comprises the step of determining (CCD) at least one channel condition of said wireless transmission (WT1) and wherein said selecting step (SEL, SEL1, SEL2, SEL3) is further based on a comparison of said determined at least one channel condition with at least one predefined channel condition.

10. Method (MET1, MET1-2, MET1-3, MET1-4) according to any of the preceding claims, wherein said first network node (BS1, NN1) is a base station of a radio communication system (RCS), wherein said second network node (MS1, NN2) is a mobile station, wherein said base station provides wireless coverage for a coverage area (CA1), wherein said method (MET1, MET1 -2, MET1-3, MET1-4) further comprises the step of determining (ILD) an interference level of an application of said feedback mode on radio frequency signals received by a further mobile station (MS2) or by a further base station (BS2) in a neighboring coverage area (CA2) and wherein said selecting step (SEL, SEL1, SEL2, SEL3) is further based on a comparison of said interference level with a predefined interference level.

11. Method (MET1, MET1-2, MET1-3, MET1-4) according to any of the preceding claims, wherein said method (MET1, MET1-2, MET1-3, MET1-4) further comprises the step of adapting (SEL, SEL1, SEL2, SEL3) a transmission mode (TM1, RM2, TM3) for said wireless transmission (WT1) based on said selected feedback mode.

12. A first network node (NN1, BS1) for selecting a feedback mode for a wireless transmission (WT1) from said first network node (NN1, BS1) to a second network node (NN2, MS1), said first network node (NN7, BS1) comprising:

   - means (NN1-TR1, NN1-TR2, NN1-CPU, NN1-PROG) for obtaining first information (CI) of a context of data (DATA1) transmitted by said wireless transmission (WT1) and/or for obtaining second information (ALI) of a utilization of radio resources of a radio link from said second network node (NN2, MS1) to said first network node (NN1, BS1), and
   - means (NN1-CPU, NN1-PROG) for selecting said feedback mode based on said first information (CI) and/or said second information (ALI).

13. First network node (NN1, BS1) according to claim 12, wherein said first network node (NN1, BS1) further comprises means (NN1 -CPU, NN1 -PROG) for determining said context and/or said utilization of radio resources.

14. A second network node (NN2, MS1, GW) comprising:

   - means (NN2-TR1, NN2-TR2, NN2-CPU, NN2-PROG) for determining a context of data (DATA1) transmitted from a first network node (NN1, BS1) to a further network node (MS1) and/or means (NN2-TR1, NN2-CPU, NN2-PROG) for determining a utilization of radio resources of a radio link from said further network node (MS1 to said first network node (NN1, BS1), and
   - means (NN2-TR1) for transmitting first information (CI) of said context and/or second information (ALI) of said utilization of radio resources.

15. Second network node (NN2, MS1 according to claim 14, wherein said second network node (NN2, MS1) is said further network node (MS1).

*FIG. 1*

RCS

BS2-AS

CL3

WT1 (DATA1)

MS2-AS

BS1-AS

MS1-AS

BS2

GW

BD

WT2 (DATA2, FB)

D2

CA2

BS1

D1

CL2

MS1

MS2

CA1

CL1

EP 2 627 116 A1

18

FIG. 2

*FIG. 3*

FIG. 4

*FIG. 5*

EP 2 627 116 A1

NN1

NN1-INT1    NN1-INT2

NN1-TR1    NN1-TR2

NN1-CPU

NN1-PROG

NN1-MEM

FIG. 6

NN2

NN2-INT1   NN2-INT2

NN2-TR1   NN2-TR2

NN2-CPU

NN2-PROG

NN2-MEM

*FIG. 7*

Europäisches
Patentamt

European
Patent Office

Office européen
des brevets

# EUROPEAN SEARCH REPORT

**Application Number**

EP 12 30 5154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/149132 A1 (LI JUNYL [US] ET AL) 28 June 2007 (2007-06-28) * abstract * * paragraph [0005] - paragraph [0009] * * paragraph [0035] - paragraph [0041] * * paragraph [0044] * * paragraph [0064] * * paragraph [0068] - paragraph [0075] * * paragraph [0102] - paragraph [0103] * * claims 1-4, 10 * * figures 2-3, 6-10, 21-22 * ----- | 1-15 | INV. H04W24/10 |
| X | US 2010/329316 A1 (SUN HONGMEI [CN] ET AL) 30 December 2010 (2010-12-30) * abstract * * paragraph [0001] * * paragraph [0020] * * paragraph [0025] - paragraph [0027] * * paragraph [0085] - paragraph [0086] * ----- | 1-15 | |
| X | US 2010/041412 A1 (YU YINGHUI [CN]) 18 February 2010 (2010-02-18) * abstract * * paragraph [0044] - paragraph [0051] * * paragraph [0055] * * paragraph [0057] * ----- | 1,2,4-15 | TECHNICAL FIELDS SEARCHED (IPC) H04W |
| X | US 2011/275382 A1 (HAKOLA SAMI-JUKKA [FI] ET AL) 10 November 2011 (2011-11-10) * abstract * * paragraph [0045] * * paragraph [0051] - paragraph [0053] * * paragraph [0066] * * paragraph [0070] - paragraph [0072] * * paragraph [0085] - paragraph [0087] * ----- | 1,12,14 | |

The present search report has been drawn up for all claims

| Place of search | Date of completion of the search | Examiner |
|---|---|---|
| Munich | 5 June 2012 | Lombardi, Giuseppe |

EPO FORM 1503 03.82 (P04C01)

**ANNEX TO THE EUROPEAN SEARCH REPORT**
**ON EUROPEAN PATENT APPLICATION NO.** EP 12 30 5154

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2012

| Patent document cited in search report | | Publication date | Patent family member(s) | | Publication date |
|---|---|---|---|---|---|
| US 2007149132 | A1 | 28-06-2007 | EP | 1964434 A2 | 03-09-2008 |
| | | | EP | 2346278 A1 | 20-07-2011 |
| | | | JP | 2009521871 A | 04-06-2009 |
| | | | KR | 20080087861 A | 01-10-2008 |
| | | | US | 2007149132 A1 | 28-06-2007 |
| | | | WO | 2007076037 A2 | 05-07-2007 |
| US 2010329316 | A1 | 30-12-2010 | NONE | | |
| US 2010041412 | A1 | 18-02-2010 | CN | 101299860 A | 05-11-2008 |
| | | | US | 2010041412 A1 | 18-02-2010 |
| | | | US | 2012058771 A1 | 08-03-2012 |
| US 2011275382 | A1 | 10-11-2011 | US | 2011275382 A1 | 10-11-2011 |
| | | | WO | 2011138495 A1 | 10-11-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *IEEE TRANSACTIONS ON WIRELESS COMMUNICATIONS,* March 2005, vol. 4 (2), 757
- **ANDREAS AHRENS ; CHRISTOPH LANGE ; VOLKER KÜHN TOBIAS WEBER.** Optimal Power Allocation in SVD Equalized Multicarrier Systems. *Proc. IEEE International Conference on Communications (ICC,* 2007
- **THORSTEN WILD.** A Rake-Finger Based Efficient Channel State Information Feedback Compression Scheme for the MIMO OFDM FDD Downlink. *Vehicular Technology Conference,* 16 May 2010